# EUROPEAN PATENT APPLICATION

(11) **EP 4 383 926 A1**
(43) Date of publication of application: **12.06.2024**
(21) Application number: 21953660.4
(22) Date of filing: 16.08.2021
(51) Int. Cl.: H04W 76/15

(54) **COMMUNICATION METHOD AND DEVICE FOR BASIC SERVICE SET HANDOVER**

(71) Applicant: Beijing Xiaomi Mobile Software Co., Ltd., Beijing 100085 (CN)
(72) Inventor: DONG, Xiandong, Beijing 100085 (CN)
(74) Representative: Steinbauer, Florian
(86) International application number: PCT/CN2021/112851
(87) International publication number: WO 2023/019406

(57) **Abstract**

This disclosure provides a communication method and device for basic service set handover. The communication method may include: determining a first message frame, where the first message frame includes first support capability information indicating at least one of: the AP MLD supports basic service set handover within the AP MLD, or the AP MLD supports basic service set handover within an extended basic service set; and sending the first message frame.

## Description

### TECHNICAL FIELD

This disclosure relates to the field of wireless communications, and more specifically, to a communication method and device for basic service set handover.

### BACKGROUND

The current scope of Wi-Fi technology research encompasses: bandwidth transmission of 320MHz, aggregation and coordination across multiple frequency bands, with the expectation to achieve at least four times the rate and throughput relative to existing standards. The primary application scenarios include video transmission, AR (Augmented Reality), VR (Virtual Reality), and the like.

Aggregation and coordination across multiple frequency bands refer to devices communicating simultaneously in the 2.4GHz, 5GHz, and 6GHz bands. For simultaneous communication across multiple frequency bands by the devices, it is necessary to define new MAC (Media Access Control) mechanisms for management. Furthermore, it is expected that multi-band aggregation and coordination will support low-latency transmission.

In current multi-band aggregation and system technology, the maximum supported bandwidth will be 320MHz (160MHz+160MHz), with the possibility of also supporting 240MHz (160MHz+80MHz) and other bandwidths.

In the current technology, stations (STA) and access points (AP) can be multi-link devices (MLD), that is, STA and AP support sending and/or receiving functions under multiple connections. Therefore, in the current technology, there can be multiple connections between STA and AP, and research is underway on communication between these two types of devices under multiple connections.

### SUMMARY

Various aspects of this disclosure will at least address the aforementioned issues and/or deficiencies. Various embodiments of this disclosure provide following technical solutions:

According to exemplary embodiments of this disclosure, a communication method is provided. The communication method can be performed by an access point that supports multi-link communication (AP MLD) and includes: determining a first message frame, where the first message frame includes first support capability information indicating at least one of: the AP MLD supports basic service set handover within the AP MLD, or the AP MLD supports basic service set handover within an extended basic service set; sending the first message frame.

According to the exemplary embodiments of this disclosure, another communication method is provided. The communication method can be performed by a station that supports multi-link communication (non-AP STA MLD), and the method includes: receiving a first message frame, where the first message frame includes first support capability information indicating at least one of: an AP MLD supports basic service set handover within the AP MLD, or the AP MLD supports basic service set handover within an extended basic service set, where the AP MLD is an access point that supports multi-link communication and communicates with the non-AP STA MLD; performing communication operations based on the first message frame.

According to the exemplary embodiments of this disclosure, a communication device is provided. The communication device can be applied to an access point that supports multi-link communication (AP MLD) and the device includes: a processor, configured to determine a first message frame, where the first message frame includes first support capability information indicating at least one of: the AP MLD supports basic service set handover within the AP MLD, or the AP MLD supports basic service set handover within an extended basic service set; a transceiver, configured to: send the first message frame.

According to the exemplary embodiments of this disclosure, another communication device is provided. The communication device can be applied to a station that supports multi-link communication (non-AP STA MLD) and the device includes: a transceiver, configured to: receive a first message frame, where the first message frame includes first support capability information indicating at least one of: an AP MLD supports basic service set handover within the AP MLD, or the AP MLD supports basic service set handover within an extended basic service set, where the AP MLD is an access point that supports multi-link communication and communicates with the non-AP STA MLD; a processor, configured to control performing of communication operations based on the first message frame.

According to the exemplary embodiments of this disclosure, an electronic apparatus is provided. The electronic device includes a memory, a processor, and a computer program stored on the memory and executable on the processor, and when the computer program is executed by the processor, the method as described above is implemented.

According to the exemplary embodiments of this disclosure, a computer-readable storage medium is provided, where the computer-readable storage medium stores a computer program, and when the computer program is executed by a processor, the method as described above is implemented.

### BRIEF DESCRIPTION OF DRAWINGS

By referring to the accompanying drawings for a detailed description of the exemplary embodiments of this disclosure, the aforementioned and other characteristics of the embodiments of this disclosure will become more apparent, where:
FIG. 1 is an exemplary schematic diagram illustrating an extended basic service set.
FIG. 2 is an exemplary schematic diagram illustrating multi-link communication.
FIG. 3 is a flowchart illustrating a communication method according to an embodiment of this disclosure.
FIG. 4 is a flowchart illustrating interactive communication according to an embodiment of this disclosure.
FIG. 5 is a flowchart illustrating another communication method according to an embodiment of this disclosure.
FIG. 6 is a block diagram illustrating a communication device according to an embodiment of this disclosure.

### DETAILED DESCRIPTION

The following description, with reference to the accompanying drawings, serves to facilitate a comprehensive understanding of the various embodiments of this disclosure as defined by the appended claims and their equivalents. The various embodiments of this disclosure include numerous specific details, but one should regard these specifics as merely exemplary. Moreover, to ensure clarity and conciseness, descriptions of well-known technology, features, and constructions may be omitted.

The terms and phrases used in this disclosure are not limited to their literal meanings but are instead as defined by the inventor to ensure clear and consistent understanding of this disclosure. Therefore, the descriptions of the various embodiments of this disclosure provided to those skilled in the art are for illustrative purposes only and not for limitation.

It should be understood that, unless the context clearly indicates otherwise, the singular forms "a," "an," "the," and "said" used herein also include plural forms. It should further be understood that the term "comprising" as used in this disclosure implies the presence of the stated features, integers, steps, operations, elements, and/or components, but does not preclude the presence or addition of one or more other features, integers, steps, operations, elements, components, and/or groups thereof.

It is to be understood that, although the terms "first," "second," and the like may be used herein to describe various elements, these elements should not be limited by these terms. These terms are only used to distinguish one element from another. Thus, without departing from the teachings of the exemplary embodiments, an element discussed as a first element below could be termed as a second element.

It should be understood that when an element is referred to as being "connected" or "coupled" to another element, it can be directly connected or coupled to the other element, or intervening elements may be present. Moreover, the terms "connected" or "coupled" as used herein may include both wireless connections or couplings. The term "and/or" used herein, or the phrase "at least one of" includes any and all combinations of one or more of the associated listed items.

Unless otherwise defined, all terms used herein (including technical and scientific terms) have the same meaning as commonly understood by one of ordinary skill in the art to which this disclosure belongs.

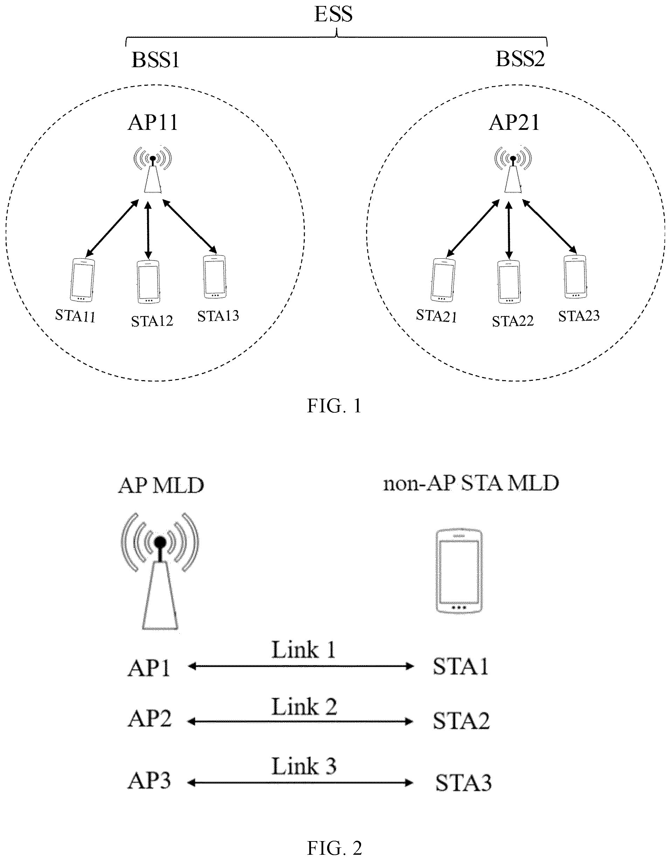

FIG. 1 is an exemplary diagram illustrating an extended basic service set.

In a wireless local area network, a basic service set (BSS) may consist of an Access Point (AP) device and one or more non-AP devices (also referred to as Station (STA) devices) that communicate with the AP device. A basic service set can connect to a distribution system (DS) through its AP device, and then access another basic service set to form an extended service set (ESS). As shown in FIG. 1, a first basic service set BSS1 and a second basic service set BSS2 constitute an extended basic service set (ESS). However, this disclosure is not limited thereto; an extended basic service set (ESS) can include more basic service sets.

The AP device in each basic service set serves as a wireless switch for a wireless network and constitutes a core of the wireless network. The AP device can be used as a wireless base station, mainly as a bridge for connecting wireless and wired networks. By using such AP devices, wired and wireless networks can be integrated.

As an example, AP devices may include software applications and/or circuits that enable other types of nodes within the wireless network to communicate with both the external and internal parts of the wireless network through the AP. For instance, an AP device can be a terminal or network device equipped with a Wi-Fi (Wireless Fidelity) chip.

As an example, the station (STA) devices within each basic service set may include, but are not limited to: cellular phones, smartphones, wearable devices, computers, individual digital assistants (PDAs), individual communication system (PCS) devices, individual information managers (PIMs), individual navigation devices (PNDs), global positioning systems, multimedia devices, Internet of Things (IoT) devices, and the like.

Although FIG. 1 illustrates the first access point device AP11 within the first basic service set BSS1 communicating with three station devices (STA11, STA12, STA13), and the second access point device AP21 within the second basic service set BSS2 communicating with three station devices (STA21, STA22, STA23), this is merely exemplary. The embodiments of the present disclosure are not limited to this; for example, AP devices and STA devices can have any number and/or any type.

In the exemplary embodiments of the present disclosure, the access point devices and station (STA) devices within each basic service set can be multi-link devices (MLDs), for instance, represented as AP MLDs and non-AP STA MLDs, respectively. That is, both AP MLDs and non-AP STA MLDs support the functionality of transmitting and/or receiving under multiple connections. For example, there may be multiple connections operating at different frequencies between an AP MLD and a non-AP STA MLD, such as connections at 2.4GHz, 5GHz, 6GHz, etc., or several connections with the same or different bandwidths at 2.4GHz, 5GHz, 6GHz. Moreover, multiple channels can exist under each connection. The communication methods and devices provided by the embodiments of the present disclosure can be applied to communications between AP MLDs and non-AP STA MLDs, that is, the communication method can be applied to a multi-link communication environment.

As shown in FIG. 2, FIG. 2 illustrates multi-link communication between an AP MLD and a non-AP STA MLD. Referring to FIG. 2, the three affiliated access points AP1, AP2, and AP3 of the AP MLD communicate with the three affiliated access points STA 1, STA 2, and STA 3 of the non-AP STA MLD under corresponding connections Link1, Link2, and Link3 respectively. However, the present disclosure is not limited to this; depending on the configuration and performance of the devices, there can be fewer or more connections between the AP MLD and the non-AP STA MLD.

To enhance the throughput of the BSS, BSS handover occurs within the ESS (extended service set). In a multi-link communication environment, the APs belonging to the same AP MLD form different BSSs, each with a distinct basic service set identifier (BSSID). For example, as shown in FIG. 2, the three affiliated APs AP1, AP2, and AP3 of the AP MLD can each constitute three separate BSSs and have different BSSIDs, respectively. Therefore, in a multi-link communication environment, it is possible for a STA to handover from one BSS to another BSS belonging to a same AP MLD, and there may also be handover of a STA to a BSS of a different AP MLD (extended basic service set). The existing technology lacks mechanisms suitable for such BSS handover in a multi-link communication environment, necessitating enhancement.

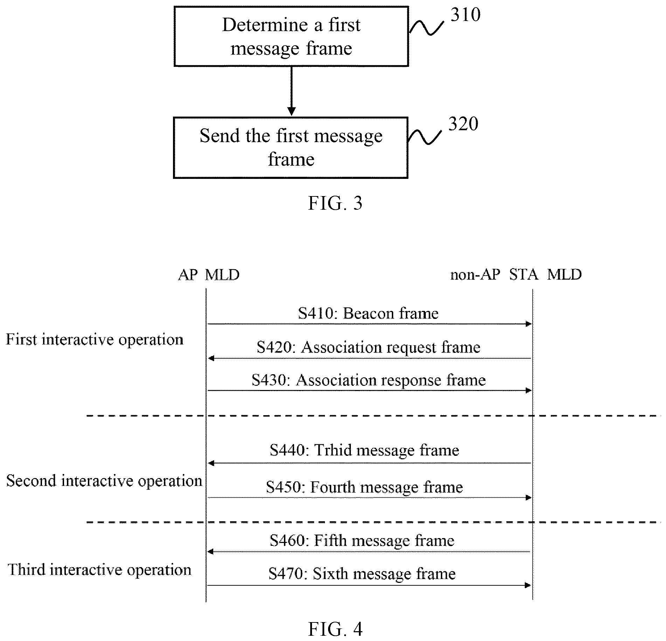

FIG. 3 is a flowchart illustrating a communication method according to an embodiment. The communication method shown in FIG. 3 can apply to an access point that supports multi-link communication (AP MLD).

Referring to FIG. 3, in step 310, a first message frame is determined, where the first message frame may include first support capability information indicating at least one of: the AP MLD supports basic service set handover within the AP MLD, or the AP MLD supports basic service set handover within an extended basic service set. In step 320, the first message frame can be sent. Steps 310 and 320 can be performed under any of the multiple connections supported by the AP MLD, and these two steps can be performed under same or different connections.

In the embodiments of the present disclosure, the first message frame can be a beacon frame, an association response frame, a re-association response frame, a probe response frame, etc. However, the disclosure is not limited to these; other types of frames capable of carrying the first support capability information are also feasible.

In the embodiments of the present disclosure, there are many ways to determine the first message frame. For example, the first message frame may be generated based on at least one of the following conditions: channel status, network conditions, load situations, hardware capabilities of sending/receiving devices, service types, and relevant protocol stipulations; the embodiments of the present disclosure do not specifically limit this. In the embodiments of the present disclosure, the first message frame may also be acquired from an external device; the embodiments of the present disclosure do not specifically limit this.

According to the embodiments of the present disclosure, the first message frame can include an Extended Capabilities element, with the first support capability information identified by the one or more first bits within the Extended Capabilities element of the first message frame. As an example, the Extended Capabilities element may have a format shown in Table 1 below.

**Table 1. Format of Extension Capability Information Element**

| Element ID | Length | Extended Capabilities |
|---|---|---|
| Octets: 1 | 1 | Variable |

Referring to Table 1, the Extended Capabilities element can include: an Element ID field for identifying the Extended Capabilities element, a Length field for indicating the length of the Extended Capabilities element, and an Extended Capabilities field for carrying various capability information.

For example, the one or more first bits can be included in the Extended Capabilities field. According to the embodiments of the present disclosure, when the one or more first bits are set to a first value, the one or more first bits indicate that the AP MLD supports basic service set handover within the AP MLD; when the one or more first bits are set to a second value, the one or more first bits indicate that the AP MLD supports basic service set handover within an extended basic service set; when the one or more first bits are set to a third value, the one or more first bits indicate that the AP MLD supports basic service set handover both within the AP MLD and within the extended basic service set.

In the embodiments of the present disclosure, "basic service set handover within the AP MLD" refers to handover between basic service sets of affiliated APs that belong to the same AP MLD, for example, as shown in FIG. 2, handover between basic service sets among AP1 to AP3, which are affiliated to the same AP MLD; "basic service set handover within an extended basic service set" refers to handover between basic service sets of affiliated APs that do not belong to the same AP MLD, for example, as shown in FIG. 1, handover between an affiliated AP of AP11serving as an AP MLD and an affiliated AP of AP21 serving as another AP MLD.

Merely as an illustrative example, the one or more first bits may include multiple bits (for example, 2 bits), for example, but not limited to, the capability information for BSS handover supported by the AP MLD can be identified by a 19th and 88th bits in the Extended Capabilities field, as shown in Table 2 below.

**Table 2. Identifiers for BSS Handover**

| Bit | Capabilities | Descriptions |
|---|---|---|
| 19 | BSS Handover | When dot11BSSTransitionActivated is true, AP or AP MLD sets this field to 1; otherwise, the field is set to 0. |
| ... | ... | ... |
| 88 | BSS Handover within ESS | When BSS handover within ESS is supported, STA or AP MLD sets this field to 1; otherwise, the field is set to 0. |

In Table 2, "dot11BSSTransitionActivated" identifies a BSS handover activation primitive, which can be set in the MAC.

For instance, when the one or more first bits are set to "10 (first value)" (for example, the 19th bit in Table 2 is set to "1", and the 88th bit is set to "0"), it is indicated that the AP MLD supports BSS handover within the AP MLD; when the one or more first bits are set to "01 (second value)" (for example, the 19th bit in Table 2 is set to "0", and the 88th bit is set to "1"), it is indicated that the AP MLD supports BSS handover within the ESS; when the one or more first bits is set to "11 (third value)" (for example, the 19th bit in Table 2 is set to "1", and the 88th bit is set to "1"), it is indicated that the AP MLD supports both BSS handover within the AP MLD and within the ESS. It will be understood that numerical values of the first to third values mentioned above are merely illustrative examples, and this disclosure is not limited thereto.

The AP MLD may identify supporting of BSS handover in the extended capabilities element, where the indication is at an MLD level (that is, the indicated BSS handover capability is applicable to all connections supported by the AP MLD). Furthermore, support for BSS handover within the AP MLD or between different AP MLDs can be identified. For example, setting 19th bit to "1" indicates support for BSS handover within the AP MLD; setting 19th bit to "1" and 88th bit to "1" indicates support for BSS handover both within the AP MLD and between different AP MLDs; setting 19th bit and 88th bit to different values (for example, "01") indicates support for BSS handover between different AP MLDs.

Additionally, it will be understood that the one or more first bits identifying BSS handover capability can have a different number of bits. For example, there may be a single bit, in which case the 19th bit in Table 2 could be described as, for instance, "set to 1 to indicate supporting of BSS handover within the AP MLD; set to 0 to indicate supporting of BSS handover both within the AP MLD and within the ESS."

It will be understood that the steps included in the communication method shown in FIG. 3 are merely exemplary, and this disclosure is not limited thereto. For example, the communication method shown in FIG. 3 may also include: receiving a second message frame from a station that supports multi-link communication and communicates with the AP MLD, which is also referred to as a non-AP STA MLD, where the second message frame may include second capability information indicating at least one of: the non-AP STA MLD supports for BSS handover within the AP MLD, or the non-AP STA MLD supports for BBS handover within an Extended Service Set.

In the embodiments of this disclosure, the second message frame can be an association request frame, a re-association request frame, a probe request frame, etc. However, this disclosure is not limited to these, as other types of frames capable of carrying the second support capability information are also feasible.

According to the embodiments of this disclosure, the second message frame may include an Extended Capabilities element, a format of the Extended Capabilities element is shown in Table 1. The second support capability information is identified by one or more second bits in the Extended Capabilities element of the second message frame.

For example, the one or more second bits may be included in the Extended Capabilities field. According to the embodiments of this disclosure, when the one or more second bits are set to a first value, the one or more second bits indicate that non-AP STA MLD supports basic service set handover within the AP MLD; when one or more second bits are set to a second value, the one or more second bits indicate that non-AP STA MLD supports basic service set handover within an extended basic service set; when one or more second bits are set to a third value, the one or more second bits indicate that non-AP STA MLD supports basic service set handover both within the AP MLD and within the extended basic service set.

For instance, the capabilities of BSS handover supported by non-AP STA MLD can be identified by a 19th and an 88th bit in the Extended Capabilities field, as illustrated in Table 3 below.

**Table 3. Identifiers for BSS Handover**

| Bit | Capabilities | Descriptions |
|---|---|---|
| 19 | BSS Handover | When dot11BSSTransitionActivated is true, STA or non-AP STA MLD sets this field to 1; otherwise, the field is set to 0. |
| ... | ... | ... |
| 88 | BSS Handover within ESS | When BSS handover within ESS is supported, STA or non-AP STA MLD sets this field to 1; otherwise, the field is set to 0. |

Similar to the embodiments of the one or more first bits described with reference to Table 2, the 19th and 88th bits in Table 3 can be similarly set to first to third values to identify BSS handover capabilities. For brevity, repetitive descriptions are omitted here.

The non-AP STA MLD can identify supporting of BSS handover within the extended capabilities element, with the identification being at the MLD level (that is, the identified support for BSS handover capabilities is applicable to all connections supported by the non-AP STA AP MLD). Furthermore, it can indicate that the non-AP STA MLD supports BSS handover within an AP MLD or between different AP MLDs. For example, setting 19th bit to " 1" indicates support for BSS handover within an AP MLD; setting 19th bit to " 1" and 88th bit to "1" indicates support for BSS handover both within an AP MLD and between different AP MLDs; setting 19th bit and 88th bit to different values (for example, "01") indicates support for BSS handover between different AP MLDs.

In the embodiments of the present disclosure, the AP MLD and non-AP STA MLD can exchange capability information through a first message frame and a second message frame to ascertain each other's various capabilities, such as BSS handover capabilities. This enables the AP MLD and the non-AP STA MLD to make reasonable communication planning during subsequent communication processes based on the capability information of each other.

FIG. 4 is a flowchart illustrating the interactive communication process according to the embodiments of the present disclosure.

Referring to FIG. 4, a first interactive operation illustrates an example of establishing an association connection between the AP MLD and the non-AP STA MLD. During the first interactive operation, the first message frame described in FIG. 3 can be a beacon frame transmitted in operation S410, or an association response frame transmitted in operation S430, with the first support capability information carried within the beacon frame or the association response frame; the second message frame described in FIG. 3 can be an association request frame transmitted in operation S420, with the second support capability information carried within the association request frame. However, it should be understood that the first interactive operation shown in FIG. 4 is merely exemplary, and the disclosure is not limited thereto. For example, an association connection can be established in a way that the non-AP STA MLD sends a probe request frame and the AP MLD responds with a probe response frame, with the second support capability information and the first support capability information carried in the probe request frame and the probe response frame, respectively.

In a second interactive operation, an affiliated access point of the AP MLD may receive a third message frame (S440) from an affiliated station of the non-AP STA MLD, where the third message frame may include identification information indicating to perform a Basic Service Set (BSS) handover within the AP MLD. That is, in the second interactive operation, the non-AP STA MLD may request an operation to perform the BSS handover within the AP MLD. For instance, the third message frame can be a BSS handover management request frame, and the BSS handover management request frame may carry information about the BSS handover. In operation S450, the affiliated access point of the AP MLD may send a fourth message frame to the affiliated station of the non-AP STA MLD to indicate to release the associated connection between the affiliated station and the affiliated access point of the AP MLD corresponding to the affiliated station. For example, the fourth message frame can be a disassociation frame, and the disassociation frame may carry information regarding termination of the connection. Specifically, in the second interactive operation, the affiliated access point of the AP MLD, in response to receiving the third message frame indicating to perform a BSS handover within the AP MLD, may release the associated connection under the connection. For example, referring to FIG. 2, assume that operations S440 and S450 are performed between the access point AP2 of the AP MLD and the station STA2 of the non-AP STA MLD, and when AP2 receives a BSS handover management request frame (the third message frame) indicating that STA2 requests to perform a BSS handover within the AP MLD (for example, STA2 may switch to the BSS of AP1 or AP3), AP2 may send a disassociation frame (the fourth message frame) to STA2, thereby unlinking a second connection Link2 between AP2 and STA2. Upon receiving the disassociation frame (the fourth message frame), the station STA2 of the non-AP STA MLD may unlink the corresponding connection and handover to communicate with the BSS of another affiliated access point within the same AP MLD.

In a third interactive operation, the affiliated access point of the AP MLD may receive a fifth message frame (S460) from the affiliated station of the non-AP STA MLD, where the fifth message frame may include identification information for indicating to perform a Basic Service Set (BSS) handover within an Extended Service Set. That is, in the third interactive operation, the non-AP STA MLD may request an operation to perform a BSS handover across different AP MLDs. For example, the fifth message frame can be a BSS handover management request frame, and the BSS handover management request frame may carry information about the BSS handover. In operation S470, the affiliated access point of the AP MLD may send a sixth message frame to the affiliated station of the non-AP STA MLD to indicate to release all association connections between the non-AP STA MLD and the AP MLD. For instance, the sixth message frame can be a disassociation frame, and the disassociation frame may carry information regarding the termination of all the association connections between the non-AP STA MLD and the AP MLD. Specifically, in the third interactive operation, the affiliated access point of the AP MLD, in response to receiving the fifth message frame indicating to perform a BSS handover to an AP MLD different from the current AP MLD, may release all previous association connections with the associated non-AP STA MLD. For example, referring to FIG. 2, assume that operations S460 and S470 are performed between the access point AP2 of the AP MLD and the station STA2 of the non-AP STA MLD. When AP2 receives a BSS handover management request frame (the fifth message frame) indicating that STA2 requests a BSS handover within the Extended Service Set (for example, STA2 may handover to the BSS of another AP MLD), AP2 may send a disassociation frame (the sixth message frame) to STA2, thereby unlinking all connections from the first connection Link1 to the third connection Link3 between the AP MLD and the non-AP STA MLD. Upon receiving the disassociation frame (the sixth message frame), the station STA2 of the non-AP STA MLD may unlink all associated connections and handover to communicate with the BSS of another affiliated access point within a different AP MLD.

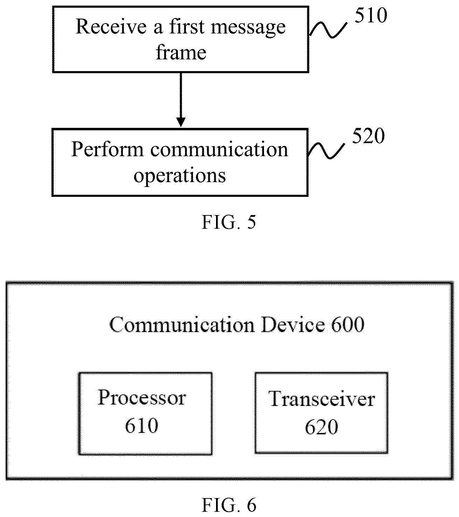

FIG. 5 is a flowchart illustrating another communication method according to an embodiment of the present disclosure. The communication method shown in FIG. 5 can be performed by a station that supports multi-link communication (non-AP STA MLD).

Referring to FIG. 5, in step 510, the method includes: receiving a first message frame, where the first message may include first support capability information indicating at least one of: an AP MLD supports Basic Service Set (BSS) handover within the AP MLD, or the AP MLD supports basic service set handover within the Extended Service Set, where the AP MLD is an access point that supports multi-link communication and communicates with the non-AP STA MLD. In step 520, the method may include: performing communication operations based on the first message frame. For example, the method may perform corresponding BSS handover operations based on the first support capability information carried in the first message frame.

According to an embodiment of the present disclosure, the first support capability information can be identified by one or more first bits in an Extended Capability Element of the first message frame.

In accordance with an embodiment of this disclosure, setting the one or more first bits to a first value indicates that the AP MLD supports Basic Service Set handover within the AP MLD; setting the one or more first bits to a second value indicates that the AP MLD supports Basic Service Set handover within the Extended Service Set; setting the one or more first bits to a third value indicates that the AP MLD supports Basic Service Set handover both within the AP MLD and within the Extended Service Set.

The first message frame, the first support capability information, the Extended Capability Element of the first message frame, and the one or more first bits may be similar to the embodiments described with reference to FIG. 3, and Tables 1 and 2. For brevity, repetitive descriptions are omitted here.

The communication method illustrated in FIG. 5 is merely exemplary, and this disclosure is not limited thereto. For example, the communication method shown in FIG. 5 may also include sending a second message frame to the AP MLD, where the second message frame may include second support capability information indicating at least one of: the non-AP STA MLD supports Basic Service Set handover within the AP MLD, or the non-AP STA MLD supports basic service set within the Extended Service Set.

In accordance with embodiments of this disclosure, the second support capability information can be identified by one or more second bits in the Extended Capability Element of the second message frame.

According to embodiments of this disclosure, when one or more second bits are set to a first value, the one or more second bits indicate that the non-AP STA MLD supports Basic Service Set handover within the AP MLD; when one or more second bits are set to a second value, the one or more second bits indicate that the non-AP STA MLD supports Basic Service Set handover within the Extended Service Set; when one or more second bits are set to a third value, the one or more second bits indicate that the non-AP STA MLD supports Basic Service Set handover both within the AP MLD and within the Extended Service Set.

The second message frame, second support capability information, Extended Capability Information Element of the second message frame, and the one or more second bits may be similar to the embodiments described with reference to FIG. 3, and Tables 1 and 3. For brevity, repetitive descriptions are omitted here.

Furthermore, the communication method illustrated in FIG. 5 may also include the operations performed by the non-AP STA MLD as shown in FIG. 4.

For example, an affiliated station of the non-AP MLD can send a third message frame (S440), where the third message frame may include identification information for indicating to perform a Basic Service Set handover within the AP MLD. Furthermore, the affiliated station can receive a fourth message frame (S450), where the fourth message frame may be used to indicate to release the connection between the affiliated station and the corresponding affiliated access point of the AP MLD.

For instance, an affiliated station of the non-AP MLD sends a fifth message frame (S460), where the fifth message frame may include identification information for indicating to perform a Basic Service Set handover within the Extended Basic Service Set. Additionally, the affiliated station receives a sixth message frame (S470), where the sixth message frame may be used to indicate to release all associated connections between the non-AP MLD and the AP MLD.

According to the embodiments of the present disclosure, when an affiliated STA hands over within the AP MLD, an identification bit can be used to indicate internal handover, for example, by using a bit in the BSSID information field of the BSS Handover Management Request frame. In this case, unlike a criterion in the prior art (where a disassociation frame sent by APs belonging to a same AP MLD results in disconnection of MLD level connections, that is, all associated connections), it is possible to disconnect current associated connections, and optionally, due to a same AP MLD is switched to, the disassociation frame needs not to be sent. When the affiliated STA hands over to a different AP MLD, the current AP sends a disassociation frame to disconnect all connections.

The communication method according to the embodiments of the present disclosure enables BSS handover within the AP MLD and BSS handover within the Extended Service Set, thereby enhancing spectrum utilization.

FIG. 6 is a block diagram showing the communication device 600 according to an embodiment. The communication device 600 depicted in FIG. 6 can be applied to an AP MLD or a non-AP MLD.

In a case where the communication device 600 shown in FIG. 6 is applied to an AP MLD, a processor 610 may be configured to determine a first message frame, where the first message frame include: first support capability information indicating at least one of: the AP MLD supports Basic Service Set (BSS) handover within the AP MLD, or the AP MLD supports basic service set handover within the Extended Basic Service Set; a transceiver 620 may be configured to send the first message frame. That is, in this case, the communication device 600 can perform the communication method described with reference to FIG. 3 and the operations performed by the AP MLD in FIG. 4, and the first message frame and first support capability information, the second message frame and second support capability information can be similar to the embodiments described with reference to FIG. 3 and Tables 1 to 3. For brevity, repetitive descriptions are omitted here.

When the communication device 600 shown in FIG. 6 is applied to a non-AP STA MLD, the transceiver 620 may be configured to receive a first message frame, where the first message frame includes first support capability information indicating at least one of: an AP MLD supports Basic Service Set (BSS) handover within the AP MLD, or the AP MLD supports basic service set handover within the Extended Basic Service Set, where the AP MLD is an access point that supports multi-link communication and communicates with the non-AP STA MLD; the processor 610 may be configured to control performing of communication operations based on the first message frame. That is, in this case, the communication device 600 can perform the communication method described with reference to FIG. 5 and the operations performed by the non-AP STA MLD in FIG. 4, and the first message frame and first support capability information, the second message frame and second support capability information can be similar to the embodiments described with reference to FIGS. 3, 5 and Tables 1 to 3. For brevity, repetitive descriptions are omitted here.

Furthermore, the communication device 600 shown in FIG. 6 serves merely as an exemplary illustration, and the embodiments of the present disclosure are not limited thereto. For instance, the communication device 600 may also include additional modules, such as a memory, etc. Moreover, the various modules within the communication device 600 can combine to form more complex modules, or they can divide into more separate modules.

According to the communication method and device of the embodiments of the present disclosure, it is possible to achieve BSS handover within the AP MLD and BSS handover within the Extended Service Set, thereby enhancing spectrum utilization.

Based on the same principles as the methods provided by the embodiments of the present disclosure, the embodiments also provide an electronic apparatus including a processor and a memory; where the memory stores machine-readable instructions (also referred to as "computer programs"); the processor executes the machine-readable instructions to implement the method described with reference to FIGS. 3 to 5.

The embodiments of the present disclosure further provide a computer-readable storage medium storing a computer program, when the computer program is executed by a processor, the method described with reference to FIGS. 3 to 5 is implemented.

In the exemplary embodiments, the processor may be configured to implement or execute various exemplary logic blocks, modules, and circuits described with reference to the content of the present disclosure, such as a CPU (Central Processing Unit), a general-purpose processor, a DSP (Digital Signal Processor), an ASIC (Application Specific Integrated Circuit), an FPGA (Field Programmable Gate Array), or other programmable logic devices, transistor logic devices, hardware components, or any combination thereof. The processor can also be a combination that implements computing functions, for example, including a combination of one or more microprocessors, a combination of DSP and microprocessor, etc.

In the example embodiments, the memory may be, for instance, ROM (Read Only Memory), RAM (Random Access Memory), EEPROM (Electrically Erasable Programmable Read Only Memory), CD-ROM (Compact Disc Read Only Memory), or other optical disc storage, optical disk storage (including compressed discs, laser discs, optical discs, Digital Versatile Discs, Blu-ray Discs, etc.), magnetic disk storage media, or other magnetic storage devices, or any other medium that can carry or store program code in the form of instructions or data structures and that can be accessed by a computer, but not limited to these.

It should be understood that although the steps in the flowcharts of the drawings are displayed in sequence according to the direction of the arrows, these steps are not necessarily performed in the order indicated by the arrows. Unless explicitly stated in this text, the execution of these steps is not strictly limited to any sequence and may occur in other orders. Moreover, at least a portion of the steps depicted in the flowcharts may include multiple sub-steps or phases, which are not necessarily completed at a same time but may be executed at different times. The execution order of these sub-steps or phases is not necessarily sequential; they may be performed alternately or in turn with at least a part of other steps or the sub-steps or phases of other steps.

Although this disclosure has been shown and described with reference to certain embodiments, those skilled in the art will appreciate that various changes in form and detail may be made without departing from the scope of this disclosure. Therefore, the scope of the disclosure should not be limited to the embodiments shown but should be defined by the accompanying claims and their equivalents.

## Claims

1. A communication method for basic service set handover, performed by an access point supporting multi-link communication, AP MLD, comprising:
determining a first message frame, wherein the first message frame comprises first support capability information indicating at least one of: the AP MLD supports basic service set handover within the AP MLD, or the AP MLD supports basic service set handover within an extended basic service set; and
sending the first message frame.

2. The communication method according to claim 1, further comprising:
receiving a second message frame from a station that communicates with the AP MLD and supports multi-link communication, non-AP STA MLD,
wherein the second message frame comprises second support capability information indicating at least one of: the non-AP STA MLD supports basic service set handover within the AP MLD, or the non-AP STA MLD supports basic service set handover within an extended basic service set.

3. The communication method according to claim 2, wherein the first support capability information is identified by one or more first bits in an extended capabilities element of the first message frame,
wherein the second support capability information is identified by one or more second bits in an extended capabilities element of the second message frame.

4. The communication method according to claim 3, wherein when the one or more first bits are set to a first value, the one or more first bits indicate that the AP MLD supports basic service set handover within the AP MLD; when the one or more first bits are set to a second value, the one or more first bits indicate that the AP MLD supports basic service set handover within the extended basic service set; when the one or more first bits are set to a third value, the one or more first bits indicate that the AP MLD supports basic service set handover both within the AP MLD and within the extended basic service set,
wherein when one or more second bits are set to the first value, the one or more second bits indicate that the non-AP STAMLD supports basic service set handover within the AP MLD; when one or more second bits are set to the second value, the one or more second bits indicate that the non-AP STA MLD supports basic service set handover within the extended basic service set; when one or more second bits are set to the third value, the one or more second bits indicate that the non-AP STA MLD supports basic service set handover both within the AP MLD and within the extended basic service set.

5. The communication method according to claim 1 or 2, further comprising:
receiving a third message frame from an affiliated station of the non-AP STA MLD, wherein the third message frame comprises identification information for indicating to perform basic service set handover within the AP MLD.

6. The communication method according to claim 5, further comprising:
sending a fourth message frame to the affiliated station to indicate to release an associated connection between the affiliated station and an affiliated access point of the AP MLD corresponding to the affiliated station.

7. The communication method according to claim 1 or 2, further comprising:
receiving a fifth message frame from an affiliated station of the non-AP MLD, wherein the fifth message frame comprises identification information for indicating to perform basic service set handover within the extended basic service set.

8. The communication method according to claim 7, further comprising:
sending a sixth message frame to the affiliated station to indicate to release all associated connections between the non-AP STA MLD and the AP MLD.

9. A communication method for basic service set handover, performed by a station supporting multi-link communication, non-AP STA MLD, comprising:
receiving a first message frame, wherein the first message frame comprises first support capability information indicating at least one of: an AP MLD supports basic service set handover within the AP MLD, or the AP MLD supports basic service set handover within an extended basic service set, wherein the AP MLD is an access point that supports multi-link communication and communicates with the non-AP STA MLD; and
performing communication operations based on the first message frame.

10. The communication method according to claim 9, further comprising:
sending a second message frame to the AP MLD,
wherein the second message frame comprises second support capability information indicating at least one of: the non-AP STA MLD supports basic service set handover within the AP MLD, or the non-AP STA MLD supports basic service set handover within an extended basic service set.

11. The communication method according to claim 10, wherein the first support capability information is identified by one or more first bits in an extended capability element of the first message frame,
wherein the second support capability information is identified by one or more second bits in an extended capability element of the second message frame.

12. The communication method according to claim 11, wherein when the one or more first bits are set to a first value, the one or more first bits indicate that the AP MLD supports basic service set handover within the AP MLD; when the one or more first bits are set to a second value, the one or more first bits indicate that the AP MLD supports basic service set handover within the extended basic service set; when the one or more first bits are set to a third value, the one or more first bits indicate that the AP MLD supports basic service set handover both within the AP MLD and within the extended basic service set,
wherein when one or more second bits are set to the first value, the one or more second bits indicate that the non-AP STAMLD supports basic service set handover within the AP MLD; when one or more second bits are set to the second value, the one or more second bits indicate that the non-AP STA MLD supports basic service set handover within the extended basic service set; when one or more second bits are set to the third value, the one or more second bits indicate that the non-AP STA MLD supports basic service set handover both within the AP MLD and within the extended basic service set.

13. The communication method according to claim 9 or 10, further comprising:
sending, by an affiliated station of the non-AP MLD, a third message frame, wherein the third message frame comprises identification information for indicating to perform basic service set handover within the AP MLD.

14. The communication method according to claim 13, further comprising:
receiving, by the affiliated station, a fourth message frame, wherein the fourth message frame is used to indicate to release an associated connection between the affiliated station and an affiliated access point of the AP MLD corresponding to the affiliated station.

15. The communication method according to claim 9 or 10, further comprising:
sending, by an affiliated station of the non-AP MLD, a fifth message frame, wherein the fifth message frame comprises identification information for indicating to perform basic service set handover within the extended basic service set.

16. The communication method according to claim 15, further comprising:
receiving, by the affiliated station, a sixth message frame, wherein the sixth message frame is used to indicate to release all associated connections between the non-AP MLD and the AP MLD.

17. A communication device, applied to an access point supporting multi-link communication, AP MLD, the communication device comprising:
a processor, configured to determine a first message frame, wherein the first message frame comprises first support capability information indicating at least one of: the AP MLD supports basic service set handover within the AP MLD, or the AP MLD supports basic service set handover within an extended basic service set; and
a transceiver, configured to send the first message frame.

18. A communication device, applied to a station supporting multi-link communication, non-AP STAMLD, the communication device comprising:
a transceiver, configured to receive a first message frame, wherein the first message frame comprises first support capability information indicating at least one of: an AP MLD supports basic service set handover within the AP MLD, or the AP MLD supports basic service set handover within an extended basic service set, wherein the AP MLD is an access point that supports multi-link device and communicates with the non-AP STA MLD; and
a processor, configured to control performing of communication operations based on the first message frame.

19. An electronic apparatus comprising a memory, a processor, and a computer program stored on the memory and executable on the processor, wherein when the processor executes the computer program, the method according to any one of claims 1 to 8 or any one of claims 9 to 16 is implemented.

20. A computer-readable storage medium, wherein the storage medium stores a computer program, and when the computer program is executed by a processor, the method according to any one of claims 1 to 8 or any one of claims 9 to 16 is implemented.
